# EUROPEAN PATENT SPECIFICATION

(11) **EP 1 291 391 B1**
(45) Date of publication and mention of the grant of the patent: **29.11.2006**
(21) Application number: 02102213.2
(22) Date of filing: 23.08.2002
(51) Int. Cl.: C08L 95/00, C08K 11/00

(54) **Bitumen aggregate and method for producing road structural layer**
Bitumenaggregat und Verfahren zur Herstellung einer strukturierten Strassenbelagsschicht
Aggregat bitumineux et procédé de construction d'une couche structurelle de revêtement routier

(30) Priority: 07.09.2001 FI 20011776
(43) Date of publication of application: 12.03.2003
(73) Proprietor: Tieliikelaitos, 00520 Helsinki (FI)
(72) Inventor: Laitinen, Esko, 90830, Haukipudas (FI)
(74) Representative: Kaukonen, Juha Veikko

(56) References cited:
- EP-A- 0 545 740
- FR-A- 2 517 686
- FR-A- 2 661 173
- DATABASE WPI Section Ch, Week 199412 Derwent Publications Ltd., London, GB; Class A93, AN 1994-097659 XP002219220 & JP 06 048803 A (CHUGAI SHOKO KK), 22 February 1994 (1994-02-22)
- DATABASE WPI Section Ch, Week 198132 Derwent Publications Ltd., London, GB; Class L02, AN 1981-57642D XP002219221 & JP 56 074146 A (OSAKA CEMENT KK), 19 June 1981 (1981-06-19)

## Description

The invention relates to a method for producing a composite layer of a traffic route, the method comprising mixing together bitumen, water, aggregate and a hydraulic binding agent, wherein the hydraulic binding agent comprises blast furnace sand and/or slag powder.

The invention further relates to a composite mix for producing a structural layer of a traffic route, the mix comprising bitumen, water, emulsifier, aggregate and a hydraulic binding agent, wherein the hydraulic binding agent comprises blast furnace sand and/or slag powder.

It should be noted that in the present application, a composite layer refers to a structural layer of a traffic route that is bound using a combination of a bituminous and one or more hydraulic binding agents. Typically, such structural layers include surfacing layers, such as a wearing course, binding course, open noise-mitigating surfacing course and a bound upper part of a base course, as well as a stabilized base course, which is a layer of the pavement. It is further to be noted that in addition to roads and streets, the term *traffic route* is herein used to refer to parking and storage areas, tracks, harbours, routes for bicycle and pedestrian traffic and other such areas that are typically provided with an asphalt surfacing and/or whose base course or a part thereof has been implemented as a stabilized structure. JP 06 048803-A discloses a composition for repairing asphalt roads comprising hydraulic cement, aggregate, polymer dispersion, and asphalt emulsion, all as an essential components. JP 56 074146-A discloses an oil absorbent composition for asphalt roads, comprising hydraulic powder, e.g. Portland cement, blast furnace slag powder or gypsum, seed stone, e.g. blast furnace quenched slag or blast furnace gradually-cooled slag, and water. FR-A-2 517 686 discloses a bitumen emulsion - asphalt mixture that comprises hydraulic powder, e.g. burnt lime, calcium hydroxide, cement, boiler ash containing CaO and blast furnace slag. EP-A-0 545 740 discloses a process of double cold treatment of a granular material for road technology. In the process there is mixed a hydraulic binder and a asphalt binder. The hydraulic binder can be e.g. cement or slag powder. FR-A-2 661 173 discloses a compound binder comprising an aqueous emulsion of at least one hydrocarbon binder and at least one hydraulic binder. The hydraulic binder consists of cement or of slag cement containing lime.

A composite surfacing mix made using emulsified or soft bitumen, or a composite stabilization mix of a base course, or a composite stabilization mix made employing a foamed bitumen technique, or a composite stabilization mix made employing another technique, refers to the material used for producing a road surfacing layer or a base course or a part thereof, the material comprising bitumen and water mixed to arrive at emulsified bitumen or foamed bitumen, or soft bitumen, and one or more hydraulic binding agents and aggregate. It should be noted that in the present application, the term *composite mix* will be used to refer to these mixes. In such mixes, the bitumen used as a binding agent in hot mixes after being heated to a mixing temperature is thus replaced by an emulsified binding agent having a corresponding viscosity. Soft, low-viscosity bitumens are commonly used for producing soft asphalt concretes by heating the aggregate to a temperature of 50 to 80°C. Foaming is another way of making bitumen easy to mix with aggregate.

In the stabilization of a base course, emulsified bitumen or foamed bitumen is commonly used as a binding agent, and the mix is usually mixed when cold. Soft bitumen may also be used for stabilization, the viscosity of soft bitumen enabling mixing with moist aggregate heated to a temperature of approximately 60...80°C. Naturally, soft bitumen can also be emulsified, in which case the aggregate does not need to be heated. Excessive flexibility of a soft binding agent can be compensated for by a hydraulic binding agent.

The emulsion of water and bitumen, which are mutually insoluble, is usually maintained by emulsifiers. Foamed bitumen is made into a mixture of water and bitumen by bringing together hot bitumen and water. The resulting foam is immediately mixed with cold aggregate; thus, no need exists to maintain a binding agent mixture.

The bitumen vapours caused by emulsion mixes are clearly fewer than those caused by hot mixes; therefore, the hydrocarbon load directed at the environment is reduced significantly. This is due to the low treatment temperatures of an emulsion mix and an emulsion binding agent since the aggregate is either left unheated or it is heated to a temperature no higher than 60...80°C, which contributes to reducing the environmental load caused by the paving process and the exposure of those carrying out the paving work to the compounds evaporating from the mix. The emissions of soft bitumens and foamed bitumen are at the same level as those of emulsions.

The most important factors affecting the in-service life of a wearing course of a traffic route include resistance to deformation of the wearing course and the lower structural layers of the surfacing. Deformation herein refers to rutting, which is caused both by after-compaction and plastic deformation of the structural layers. In addition to wear caused by anti-skid tyres, ruts are formed in the wearing course as a result of the contraction and sideways movement of the wearing course and the lower structural layers caused by wheel load.

The structural layers of a surfacing deform most rapidly under the load caused by heavy traffic and in areas where the load is at least partly static. In addition, the higher the temperature of a structural layer, the more plastic and more easily deformable it becomes. Plastic deformation thus mostly occurs during the hottest time of summer.

A bitumen-bound base course or a part thereof may also undergo deformation as a result of after-compaction, permanent bend or even plastic deformation caused by load. A long hot season also raises the temperature of the bitumen-bound base course underneath the surfacing layers, thus reducing the bending and deformation rigidity of the course.

It is known to reduce the plastic deformation of a structural layer of a surfacing made of an emulsion mix by mix designing the aggregate body thereof, by using as stiff mastic as possible, and by modifying the bitumen binding agent. The rigidity of a base course against deformations can also be improved by the mix design of the aggregate body and/or by using as stiff bitumen as possible. Furthermore, hydraulic binding agents, i.e. binding agents that need water for bonding, are used together with bitumen as a binding agent for the surfacing layer or the base course or a part thereof; this is made possible by the water present in the emulsion mix or foamed bitumen mix or another mix to be mixed at a low temperature. Generally known hydraulic binding agents include cement and lime.

A hydraulic binding agent stiffens the structural layers/layer of the surfacing, which reduces plastic deformation and thus rutting. A hydraulic binding agent can also be used for stiffening the base course or a part thereof, which makes it stiffer against deformation. However, the resistance to weather of the known hydraulic binding agents is not good; they do not withstand the effect of anti-icing salt and frost but their rigid bonds break down when freezing water expands in the porous space. The breakdown of the bonds results in disintegration of the surfacing layer, which means that the surfacing has to be renovated. Consequently, the resistance to weather of the known composite structures has not met the required criteria.

The surfacing materials used as wearing and binding courses are water permeable; this means that anti-icing salt dissolved in water will find its way to the base course through the wearing and binding courses. The base course thus also disintegrates. Naturally, cement may quite readily be used as a hydraulic binding agent in areas where the temperature does not usually drop below the freezing point of water. However, this problem still affects a vast majority of the motorized world.

An object of the present invention is to provide a method for producing a composite layer, and a composite layer so as to avoid the above-mentioned drawbacks.

The method of the invention is characterized in that the blast furnace sand and/or slag powder content is 2 to 12 mass-% and that the hydraulic binding agent further comprises 0.5 to 2 mass-% of cement.

The composite layer of the invention is characterized in that the blast furnace sand and/or slag powder content is 2 to 12 mass-% and that the composite mix further comprises 0.5 to 2 mass-% of cement.

The idea underlying the invention is that the hydraulic binding agent to be mixed with the composite layer mix at least partly consists of blast furnace sand and/or slag powder ground therefrom. Furthermore, the idea underlying a preferred embodiment is that the mix also comprises cement.

An advantage of the invention is that the resistance to weather of the composite layer can be improved considerably. Blast furnace sand and slag powder are inexpensive and easily available. Cement improves the initial strength of the layer and activates the bonding of the blast furnace sand and the slag powder. A further advantage is that the invention can be applied both in connection with ordinary asphalts and reclaimed asphalts as well as in connection with a stabilized base course containing asphalt crush as an ingredient or a part thereof.

The invention will be described in greater detail in the accompanying examples and drawing, which is a cross-sectional side view schematically showing an embodiment of a traffic route comprising composite layers of the invention.

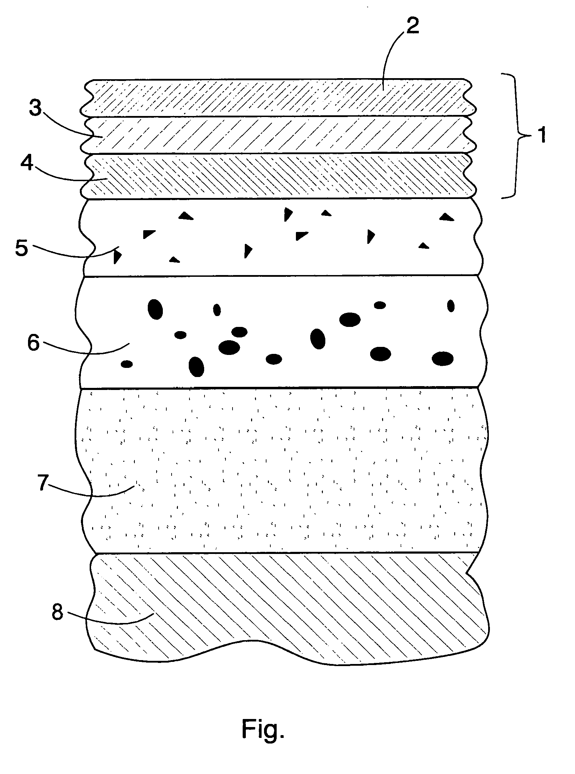

The figure is a cross-sectional side view schematically showing an embodiment of a traffic route comprising composite layers of the invention. The structure of the traffic route is divided into a pavement and a substructure. The pavement is further divided into an upper section, which comprises surfacing layers 1 comprising, as seen from the top, a wearing course 2, a binding course 3 and a bound upper part 4 of a base course, as well as an unbound lower part 5 of the base course. Similarly, the lower part of the pavement comprises a sub-base 6 and a protective course 7. The surfacing layers 1 are spread and compressed on top of the base course. The pavement is arranged on top of the substructure 8, such as a subgrade, ballast or the like.

It will be obvious to one skilled in the art that a pavement does not necessarily always comprise all courses 2 to 7 shown in the figure. On the other hand, the binding and wearing courses can also be constructed as special structures for reducing traffic and tyre noise.

The composite surfacing mix constituting the courses 2 to 4 of the surfacing 1 is e.g. mixed at a mixing plant, preparing a bitumen emulsion by mixing a dispersion of bitumen and water, the dispersion being further mixed with cold aggregate or aggregate heated to a suitable temperature. The prepared mix is further mixed with a hydraulic binding agent comprising blast furnace sand, slag powder made of blast furnace sand or both and, if necessary, cement to activate the bonding thereof. Cement is used when the structure is quickly to be provided with initial strength against road work machine or traffic load.

The composite surfacing mix may also be mixed such that the hydraulic binding agent is mixed with the aggregate prior to mixing the bitumen emulsion. The hydraulic binding agents may also be mixed together before they are added to the mix. Instead of mixing the composite layer mix at a mixing plant, it may also be mixed on site.

The bitumen in the composite layer may be foamed bitumen, soft bitumen or emulsified bitumen. Refreshed, freshly milled or crushed surfacing mass may also be used as the bituminous binding agent.

In connection with emulsification, an emulsifier is added to the emulsion to maintain the emulsion, preventing bitumen droplets from reuniting. Numerous different emulsifiers are known; they will not be discussed in greater detail herein.

Soft bitumen heated to a mixing temperature can be mixed with moist, heated aggregate, the hydraulic binding agents being mixed as described above, depending on whether the mix is prepared at a mixing plant or on site. Cold aggregate usually requires also the soft bitumen to be emulsified as well.

The base course or the upper part 4 thereof may also be made of the composite mix. A pavement and the layers thereof are, however, obvious to one skilled in the art, so they will not be discussed in greater detail in the present application. Similarly, the steps relating to laying and compressing the mix are well known to one skilled in the art, so they will not be described in greater detail herein either.

The composite stabilization mix of the bound base course 4 may be prepared using the above-described methods. The aggregate is then usually left unheated, except when reclaimed asphalt is used whose binding agent is to be refreshed.

The composite mix may be prepared e.g. by employing a foamed bitumen technique. Hot bitumen is then foamed up by mixing it with some water, and by lowering the pressure, the mix is let to expand its volume by at least 15 times, after which the foam is immediately mixed with cold aggregate. If necessary, a coupling agent is added to the bitumen prior to foaming.

In on-site mixing, the hydraulic binding agents are spread on top of a structural layer in connection with stabilization milling before bitumen is added to a mixing drum. The bitumen may be added as an emulsion or as foamed bitumen. Powdery hydraulic binding agents are added to the mix usually mixed with water directly through the mixing drum during the stabilization milling.

The bitumen in the mix acts as a binding agent to bind the components such that they form a uniform plastic mix. Together with the bitumen, water is to produce an emulsion with the appropriate viscosity in order to spread the bitumen evenly all over the entire mix. In order to make the emulsion homogenous, the dry aggregate must also be prewet.

After the breakdown of the emulsion, the emulsifier acts as a coupling agent in the mix, pushing water off the aggregate surfaces, which enables the bitumen to be effectively adhered to the aggregate. In order to improve the adhesion, a separate coupling agent may be added to the bitumen prior to emulsification, if necessary. A coupling agent functioning in a corresponding manner is used in foamed bitumen, if necessary, wherein it is added to the bitumen base. In soft bitumens, a coupling agent is generally always used.

In addition to the above-mentioned components, a finished composite mix made using emulsified or soft bitumen or employing a foamed bitumen technique or another technique may comprise other components, such as filling agents or fibres, to improve the strength properties of a surfacing.

The composite mixes, like other mixtures of aggregate and a bituminous binding agent, i.e. asphalts, can be divided into asphalts and reclaimed asphalts. In reclaimed asphalt, at least 20% of the raw material is asphalt mass made of asphalt or asphalt surfacing by crushing or milling. Asphalts containing less than 20% of reclaimed asphalt are ordinary asphalts. The composite mix may also comprise reclaimed asphalt in an unlimited amount, depending on the load bearing capacity and flexibility requirements set for a structure.

Naturally, the structural layers 2 to 5 of a traffic route may also be formed such that only some of them are composite ones while the rest of the parts are made e.g. of hot mix. A stabilization mix prepared employing a foamed bitumen technique is generally only used in the base course 4, 5 but it can also be used in the wearing and binding courses 2, 3.

### Example 1

Asphalt concrete mixes of the AB 16 mix type were prepared wherein the binding agent to be emulsified was bitumen B160/220. The bitumen content was 5.4 mass-%. The mixes further comprised a coupling agent called Raisamin DT, which was added to the bitumen, the content being 0.3 mass-% of the weight of the bitumen, and an emulsifier called Lilamuls EM 26, the content being 0.4 mass-% of the weight of the total emulsion. The mixes were mixed at a temperature of 80°C. It is to be noted herein that the percentages disclosed in the present application are mass percentages unless otherwise stated. A common hot surfacing mix is used as a reference mix.

The blast furnace sand and cement contents of the mixes were varied as shown in Table 1. Table 1 also shows the measurement results indicating the long-term durability of the mixes. The long-term durability is shown as a weatherproofness number obtained as a relation between the splitting tensile strength of a specimen after a loading test and a specimen that has not been tested. The test was conducted employing a freezing-and-thawing test according to the SFS-EN 1367-1 standard. The standard corresponds with the Europeans standard EN 1367-1:1999. Instead of water, a 1% salt solution was used which was absorbed under negative pressure into the porous space of the specimens until saturation point. All these samples were measured for splitting tensile strengths at the age of 7 days, and the samples containing blast furnace sand, i.e. 1, 3a and 3b, also at the age of 90 days. The samples containing cement only, i.e. 2a and 2b, were not measured at the age of 90 days since the sample age does not affect their weatherproofness. The weatherproofness number of both of the sample ages of samples 2a and 2b is thus the same. The splitting tensile strength was measured in accordance with a PANK 4301 method. The method loosely follows a standard in preparation called CEN TC227/WG1 Test Reference number 1.9a/February 1995: Determination of the water sensitivity of specimen.

**Table 1**

| Mix/no. | Cement content (%) | Blast furnace sand content (%) | Weatherproofness number % | |
|---|---|---|---|---|
| | | | 7 days | 90 days |
| hot mix | 0 | 0 | 69 | (69) |
| 1 | 0 | 5 | 37 | 82 |
| 2a | 2 | 0 | 58 | (58) |
| 2b | 4 | 0 | 40 | (40) |
| 3a | 2 | 5 | 61 | 70 |
| 3b | 4 | 5 | 50 | 71 |

As can be clearly seen in Table 1, blast furnace sand considerably increases the weatherproofness number of the mixes, i.e. improves the long-term durability of the surfacing. After 90 days of preparation, the weatherproofness number of specimen 1 stiffened with blast furnace sand is even better than that of the hot surfacing specimen that was used as a reference. As to sample pair 2a and 2b, it can be stated that an increase in the amount of cement impairs the strength of the surfacing. As to sample pair 3a and 3b, it can be stated that in the specimens containing blast furnace sand, an increase in the amount of cement impairs the weatherproofness number at the age of 7 days but at the age of 90 days no difference exists, which is due to a random error.

It is to be noted herein that the strength of cement specimens is ordinarily determined from 28-day-old samples. At the age of 28 days, the strength of cement-activated blast furnace sand stabilization is approximately 40 to 50% while at the age of 3 months it is approximately 50 to 60% of the final strength. The final strength is achieved approximately at the age of 12 months. A concrete structure is considered to be frost-proof at the age of 28 days, when its strength after a loading test is at least 2/3 of the original strength.

### Example 2

Stone mastic asphalt mixes of the SMA 16 mix type were prepared wherein the binding agent to be emulsified was bitumen B160/220. The bitumen content was determined by a mix-specific mix design. The mixes further comprised a coupling agent called Raisamin DT, the content being 0.3% of the weight of the bitumen base, and an emulsifier called Lilamuls EM 26, the content being 0.4% of the weight of the emulsion. The cement used was rapid cement. The mixes were mixed at a temperature of 80°C. The hydraulic binding agent of the mixes comprised 8.0% of slag powder and cement having the contents shown in Table 2.

Mixes 5a and 5b and mixes 6a and 6b have different aggregate. Mix 4 is a hot mix used as a reference wherein, instead of slag powder and cement, a lime filler was used and, furthermore, a German made cellulose fibre called Arbocell was used as loose fibre.

Table 2 shows measurement results of the mixes shown in Example 2 as measured by a wheel tracking machine in accordance with a PANK 4205 method. The method corresponds with prEN 12697-22. The deformation durability of the mixes is shown as divided into initial compaction and depth of the total groove, which is the sum of the initial compaction and the deformation thereafter. On the basis of the depth of the total groove, a deformation class, which is a well-known concept to one skilled in the art, according to the asphalt standards has further been determined for the mixes.

The water resistance of the specimens is shown as an adhesion number determined according to the PANK-4301 method. The long-term durability (frost resistance) of the specimens is shown as a weatherproofness number in accordance with the SFS-EN 1367-1 standard.

**Table 2**

| Mix/no. | Cement (%) | Initial comp. (mm) | Total groove (mm) | Deform. class | Adhesion number (%) | Weatherproofness number (%) | |
|---|---|---|---|---|---|---|---|
| | | | | | | 7 days | 90 days |
| 4 (ref.) | 0 | 4,3 | 6,8 | II | 89,3 | 94,6 | (94,6) |
| 5a | 0 | 1,8 | 3,9 | I | 92,0 | 74,6 | 97,5 |
| 5b | 2 | 0,6 | 0,7 | I | 87,4 | 79,0 | 78,5 |
| 6a | 0 | 2,9 | 3,4 | I | 95,5 | 53,8 | 95,2 |
| 6b | 2 | 0,4 | 0,5 | I | 90,4 | 66,2 | 81,9 |

It can be seen in the table that cement, even in small amounts, quickly provides the surfacing with initial strength, i.e. reduces the initial compaction. Cement further serves as an activator of blast furnace sand and slag powder, accelerating the onset of the binding reaction thereof. Cement also considerably reduces the after-compaction of a mix. All of the mixes 5a to 6b of the invention reach deformation class I, whereas the hot mix used as the reference falls into deformation class II. The adhesion number, i.e. water resistance, of the mixes of the invention is of a similar order than that of the reference.

It can further be seen in Table 2 that the weatherproofness number of the mixes of the invention is high, i.e. their frost resistance is extremely good. The cement added to mixes 5b and 6b decreases the weatherproofness number by approximately 15 to 20% but the number is still high enough in order to fulfill the requirements set by the standards, clearly exceeding the frost resistance requirement set for concrete structures, i.e. after a loading test the strength is at least 2/3 of the initial strength.

The deterioration of the weatherproofness number caused by cement is due to the fact that it forms stiff bonds, decreasing the flexibility of the surfacing. Consequently, while freezing and expanding, the water absorbed into the porous space causes the surfacing to disintegrate. It is thus reasonable to use cement only as an activator of blast furnace sand and/or slag powder; for this purpose, contents in the order of 0.5...1.0% of the weight of the mix usually suffice.

The blast furnace sand and slag powder content in the composite surfacing mix may be 2 to 12 mass-%, preferably 2 to 8 mass-%, most preferably 2 to 5 mass-%. The cement content is 0.5 to 2 mass-%, preferably 0.5 to 1 mass-%, most preferably 0.5 to 0.75 mass-%. In composite stabilization mixes, the contents are of a similar order.

Blast furnace sand and slag powder ground therefrom can be used as different fractions and combinations together with cement both in surfacing and stabilization mixes. By using different grain sizes, the characteristics of the mix can be adjusted according to the requirements set by a given application. The grain size of the materials improving weatherproofness can be selected to serve also other purposes than those used for improving weatherproofness in a bitumen emulsion mix.

The drawing and the related description are only intended to illustrate the idea of the invention. In its details, the invention may vary within the scope of the claims. The invention can thus be applied e.g. to the preparation of soft asphalt concretes, asphalt concrete, stone mastic asphalt and open asphalt as well as other composite surfacing materials and corresponding recycled surfacing materials and composite stabilization layers whose voids content allow for implementation by an emulsion technique.

## Claims

1. A method for producing a composite layer of a traffic route, the method comprising mixing together bitumen, water, aggregate and a hydraulic binding agent, wherein the hydraulic binding agent comprises blast furnace sand and/or slag powder, **characterized in that** the blast furnace sand and/or slag powder content is 2 to 12 mass-% and that the hydraulic binding agent further comprises 0.5 to 2 mass-% of cement.

2. A method as claimed in claim 1, **characterized in that** the blast furnace sand and/or slag powder content is 2 to 8 mass-%.

3. A method as claimed in claim 2, **characterized in that** the blast furnace sand and/or slag powder content is 2 to 5 mass-%.

4. A method as claimed in any one of the preceding claims, **characterized in that** the cement content is 0.5 to 1 mass-%.

5. A method as claimed in claim 4, **characterized in that** the cement content is 0.5 to 0.75 mass-%.

6. A method as claimed in any one of the preceding claims, **characterized in that** the structural layer is a wearing course (2).

7. A method as claimed in any one of claims 1 to 5, **characterized in that** the structural layer is a binding course (3).

8. A method as claimed in any one of claims 1 to 5, **characterized in that** the structural layer is a base course or a part thereof (4, 5).

9. A composite mix for producing a structural layer of a traffic route, the mix comprising bitumen, water, emulsifier, aggregate and a hydraulic binding agent, wherein the hydraulic binding agent comprises blast furnace sand and/or slag powder, **characterized in that** the blast furnace sand and/or slag powder content is 2 to 12 mass-% and that the composite mix further comprises 0.5 to 2 mass-% of cement.

10. A composite mix as claimed in claim 9, **characterized in that** the blast furnace sand and/or slag powder content is 2 to 8 mass-%.

11. A composite mix as claimed in claim 10, **characterized in that** the blast furnace sand and/or slag powder content is 2 to 5 mass-%.

12. A composite mix as claimed in claim 9, **characterized in that** the cement content is 0.5 to 1 mass-%.

13. A composite mix as claimed in claim 12, **characterized in that** the cement content is 0.5 to 0.75 mass-%.

14. A composite mix as claimed in any one of claims 9 to 13, **characterized in that** the mix is asphalt.

15. A composite mix as claimed in any one of claims 9 to 14, **characterized in that** the mix is reclaimed asphalt.

## Patentansprüche

1. Verfahren zur Herstellung einer Verbundschicht eines Verkehrswegs, wobei das Verfahren das Zusammenmischen von Bitumen, Wasser, Zuschlagstoff und einem hydraulischen Bindemittel umfasst, wobei das hydraulische Bindemittel Hochofensand und/oder Schlackepulver umfasst, **dadurch gekennzeichnet, dass** der Hochofensand- und/oder Schlackepulvergehalt 2 bis 12 Massen-% beträgt und dass das hydraulische Bindemittel des Weiteren 0,5 bis 2 Massen-% Zement umfasst.

2. Verfahren nach Anspruch 1, **dadurch gekennzeichnet, dass** der Hochofensand- und/oder Schlackepulvergehalt 2 bis 8 Massen-% beträgt.

3. Verfahren nach Anspruch 2, **dadurch gekennzeichnet, dass** der Hochofensand- und/oder Schlackepulvergehalt 2 bis 5 Massen-% beträgt.

4. Verfahren nach einem der voranstehenden Ansprüche, **dadurch gekennzeichnet, dass** der Zementgehalt 0,5 bis 1 Massen-% beträgt.

5. Verfahren nach Anspruch 4, **dadurch gekennzeichnet, dass** der Zementgehalt 0,5 bis 0,75 Massen-% beträgt.

6. Verfahren nach einem der voranstehenden Ansprüche, **dadurch gekennzeichnet, dass** die strukturierte Schicht eine Verschleißschicht (2) ist.

7. Verfahren nach einem der Ansprüche 1 bis 5, **dadurch gekennzeichnet, dass** die strukturierte Schicht eine Binderschicht (3) ist.

8. Verfahren nach einem der Ansprüche 1 bis 5, **dadurch gekennzeichnet, dass** die strukturierte Schicht eine Tragschicht oder ein Teil davon (4,5) ist.

9. Verbundgemisch zur Herstellung einer strukturierten Schicht eines Verkehrsweges, wobei das Gemisch Bitumen, Wasser, Emulgator, Zuschlagstoff und ein hydraulisches Bindemittel umfasst, wobei das hydraulische Bindemittel Hochofensand und/oder Schlackepulver umfasst, **dadurch gekennzeichnet, dass** der Hochofensand- und/oder Schlackepulvergehalt 2 bis 12 Massen-% beträgt und dass das Verbundgemisch des Weiteren 0,5 bis 2 Massen-% Zement umfasst.

10. Verbundgemisch nach Anspruch 9, **dadurch gekennzeichnet, dass** der Hochofensand- und/oder Schlackepulvergehalt 2 bis 8 Massen-% beträgt.

11. Verbundgemisch nach Anspruch 10, **dadurch gekennzeichnet, dass** der Hochofensand- und/oder Schlackepulvergehalt 2 bis 5 Massen-% beträgt.

12. Verbundgemisch nach Anspruch 9, **dadurch gekennzeichnet, dass** der Zementgehalt 0,5 bis 1 Massen-% beträgt.

13. Verbundgemisch nach Anspruch 12, **dadurch gekennzeichnet, dass** der Zementgehalt 0,5 bis 0,75 Massen-% beträgt.

14. Verbundgemisch nach einem der Ansprüche 9 bis 13, **dadurch gekennzeichnet, dass** das Gemisch Asphalt ist.

15. Verbundgemisch nach einem der Ansprüche 9 bis 14, **dadurch gekennzeichnet, dass** das Gemisch wiedergewonnener Asphalt ist.

## Revendications

1. Procédé pour produire une couche composite d'une voie de circulation, le procédé comprenant de mélanger ensemble du bitume, de l'eau, des agrégats et un agent de liaison hydraulique, dans lequel l'agent de liaison hydraulique comprend du sable de haut-fourneau et/ou de la poudre de laitier, **caractérisé en ce que** la teneur de sable de haut-fourneau et/ou de poudre de laitier est de 2 à 12%, et **en ce que** l'agent de liaison hydraulique comprend en outre 0,5 à 2% en masse de ciment.

2. Procédé selon la revendication 1, **caractérisé en ce que** la teneur de sable de haut fourneau et/ou de poudre de laitier est de 2 à 8% en masse.

3. Procédé selon la revendication 2, **caractérisé en ce que** la teneur de sable de haut-fourneau et/ou de poudre de laitier est de 2 à 5% en masse.

4. Procédé selon l'une quelconque des revendications précédentes, **caractérisé en ce que** la teneur de ciment est de 0,5 à 1 % en masse.

5. Procédé selon la revendication 4, **caractérisé en ce que** la teneur de ciment est de 0,5 à 0,75% en masse.

6. Procédé selon l'une quelconque des revendications précédentes, **caractérisé en ce que** la couche structurelle est une couche d'usure (2).

7. Procédé selon l'une quelconque des revendications 1 à 5, **caractérisé en ce que** la couche structurelle est une couche de liaison (3).

8. Procédé selon l'une quelconque des revendications 1 à 5, **caractérisé en ce que** la couche structurelle est une couche de base ou une partie de celle-ci (4, 5).

9. Mélange composite pour produire une couche structurelle d'une voie de circulation, le mélange comprenant du bitume, de l'eau, un émulsifiant, des agrégats et un agent de liaison hydraulique, dans lequel l'agent de liaison hydraulique comprend du sable de haut-fourneau et/ou de la poudre de laitier, **caractérisé en ce que** la teneur de sable de haut-fourneau et/ou de poudre de laitier est de 2 à 12% en masse, et **en ce que** le mélange composite comprend en outre 0,5 à 2% en masse de ciment.

10. Mélange composite selon la revendication 9, **caractérisé en ce que** la teneur de sable de haut-fourneau et/ou de poudre de laitier est de 2 à 8% en masse.

11. Mélange composite selon la revendication 10, **caractérisé en ce que** la teneur de sable de haut-fourneau et/ou de poudre de laitier est de 2 à 5% en masse.

12. Mélange composite selon la revendication 9, **caractérisé en ce que** la teneur de ciment est de 0,5 à 1% en masse.

13. Mélange composite selon la revendication 12, **caractérisé en ce que** la teneur de ciment est de 0,5 à 0,75% en masse.

14. Mélange composite selon l'une quelconque des revendications 9 à 13, **caractérisé en ce que** le mélange est de l'asphalte.

15. Mélange composite selon l'une quelconque des revendications 9 à 14, **caractérisé en ce que** le mélange est de l'asphalte recyclé.
